# EUROPEAN PATENT APPLICATION

(11) **EP 4 488 072 A1**
(43) Date of publication of application: **08.01.2025**
(21) Application number: 23763177.5
(22) Date of filing: 06.02.2023
(51) Int. Cl.: B41M 1/06, B41M 1/30, C09D 11/101

(54) **METHOD FOR MANUFACTURING PRINTED MATTER, LAMINATE USING SAME, AND METHOD FOR MANUFACTURING PACKAGING BAG**

(30) Priority: 03.03.2022 JP 2022032412
(71) Applicant: Toray Industries, Inc., Tokyo 103-8666 (JP)
(72) Inventor: SADAKUNI, Hironobu, Otsu-shi, Shiga 520-8558 (JP); KAWAI, Yurika, Otsu-shi, Shiga 520-8558 (JP); INOUE, Takejiro, Otsu-shi, Shiga 520-8558 (JP)
(74) Representative: Kador & Partner Part mbB
(86) International application number: PCT/JP2023/003744
(87) International publication number: WO 2023/166915

(57) **Abstract**

Provided is a method of producing a printed matter, the method including, in the order mentioned: the transfer step of transferring an ink onto a polyolefin film having a tensile modulus of 200 MPa to 1,000 MPa in an MD direction by a central impression printing method; and the curing step of irradiating the ink with an electron beam to cure the ink. This method of producing a printed matter can yield a printed matter that has excellent register accuracy and can inhibit the breakage of a packaging bag, even with the use of a flexible film such as a polyolefin film.

## Description

### Technical Field

The present invention relates to: a method of producing a printed matter; a laminate using the same; and a method of producing a packaging bag.

### Background Art

Various printing methods such as gravure printing, flexographic printing, offset printing, ink-jet printing, silk screen printing, and roll coater printing are widely employed for imparting designs to packaging materials of food products and hygiene products. Particularly, gravure printing and flexographic printing are employed for flexible packaging materials using plastic films. However, in gravure printing and flexographic printing, inks containing solvents and water are generally used, and there is thus a concern about the environmental load caused by an increase in VOCs, carbon dioxide, and the like that are emitted in the process of drying such inks.

Therefore, in recent years, active energy ray-curable printing inks that can be instantly cured by irradiation with an active energy ray, such as an electron beam or a UV ray, have been increasingly used. Conventionally, for the purposes of, for example, improving the adhesion to a plastic film in offset printing that is generally employed as a printing method for paper, the following have been proposed: an active energy ray-curable ink composition for offset printing, which is characterized by containing a compound having an ethylenic unsaturated bond, a photopolymerization initiator, and 8% by mass to 12% by mass of a sensitizing agent having a specific structure, and a method of producing a printed matter, which method includes the printing step of performing offset printing on a resin film using the active energy ray-curable ink composition for offset printing, and the curing step of irradiating the resin film with an active energy ray after the printing step (see, for example, Patent Literature 1); an active energy ray-curable composition containing one or plural kinds of active energy ray-polymerizable compounds having a (meth)acryloyl group, which composition is characterized in that (1) the (meth)acryloyl group concentration in the composition is in a range of 0.5 mmol/g or higher but lower than 2.2 mmol/g and (2) a cured coating film of the composition has an indentation elastic modulus in a range of 100 MPa or more but less than 1,000 MPa, and a method of producing an ink-cured product, which method is characterized by including performing offset printing using such an ink composition, and curing the thus printed ink with an active energy ray (see, for example, Patent Literature 2); and a method of producing a printed matter by printing an ink on a film, which method uses a film having a nitrogen element concentration of 0.5 to 10.0% by atom in the film surface, and includes the step of irradiating the film with an active energy ray after printing (see, for example, Patent Literature 3).

### Citation List

### Patent Literature

[Patent Literature 1] JP 2015-168730
[Patent Literature 2] JP 2020-33465
[Patent Literature 3] WO 2018/163941

### Summary of Invention

### Technical Problem

In recent years, with the expansion of the use of flexible packaging materials, there is a demand for packaging materials that use more flexible plastic films. Particularly, in those cases of printing a flexible film such as a polyolefin film by a general roll-to-roll method, since the tension that can be applied to the film is limited, there is a problem that the ink cohesion causes misalignment of the film, resulting in insufficient register accuracy. Meanwhile, when a harder film is selected for improving the register accuracy and applied to a packaging bag, there is a problem that the film makes the packaging bag more likely to be broken.

In view of the above, an object of the present invention is to provide a method of producing a printed matter, by which a printed matter that has excellent register granularity and can inhibit the breakage of a packaging bag can be obtained even with the use of a flexible film such as a polyolefin film.

### Solution to Problem

In order to solve the above-described problem, the present invention has the following constitution.
(1) A method of producing a printed matter, the method including, in the order mentioned:
   the transfer step of transferring an ink onto a polyolefin film having a tensile modulus of 200 MPa to 1,000 MPa in an MD direction by a central impression printing method; and
   the curing step of irradiating the ink with an electron beam to cure the ink.
(2) The method of producing a printed matter according to (1), wherein the polyolefin film has a thickness of 20 µm to 60 µm.
(3) The method of producing a printed matter according to (1) or (2), wherein a ratio (C2/C1) of a crystallinity C2 of the polyolefin film after electron beam irradiation performed under the conditions of an acceleration voltage of 110 kV and an irradiation dose of 40 kGy with respect to a crystallinity C1 of the polyolefin film is 0.8 to 1.2.
(4) The method of producing a printed matter according to any one of (1) to (3), wherein the crystallinity C2 of the polyolefin film after electron beam irradiation performed under the conditions of an acceleration voltage of 110 kV and an irradiation dose of 40 kGy is 20% to 50%.
(5) The method of producing a printed matter according to any one of (1) to (4), wherein the polyolefin film contains a polyethylene resin in an amount of 10% by mass or more.
(6) The method of producing a printed matter according to (5), wherein the polyolefin film further contains a polypropylene resin in an amount of 90% by mass or less.
(7) The method of producing a printed matter according to any one of (1) to (6), wherein the content of a crystal nucleating agent in the polyolefin film is 0.01% by mass or less.
(8) The method of producing a printed matter according to any one of (1) to (7), wherein, in the curing step, the electron beam is irradiated under the conditions of an acceleration voltage of 70 kV to 90 kV and an irradiation dose of 20 kGy to 60 kGy.
(9) The method of producing a printed matter according to any one of (1) to (8), wherein the ink contains an anionic surfactant.
(10) The method of producing a printed matter according to any one of (1) to (9), wherein the ink contains a urethane (meth)acrylate.
(11) The method of producing a printed matter according to any one of (1) to (10), wherein, in the transfer step, the ink is transferred by offset printing.
(12) A method of producing a laminate, the method including the steps of:
   producing a printed matter by the method according to any one of (1) to (11); and
   laminating an unstretched polyolefin film on the printed matter.
(13) The method of producing a laminate according to (12), wherein the unstretched polyolefin film has a tensile modulus of 50 MPa to 400 MPa.
(14) The method of producing a laminate according to (12) or (13) wherein the unstretched polyolefin film has a thickness of 30 µm to 100 µm.
(15) A method of producing a packaging bag, the method including the steps of, in the order mentioned:
   producing a laminate by the method of producing a laminate according to any one of (12) to (14); and
   producing a bag from the laminate.

### Advantageous Effects of Invention

According to the method of producing a printed matter according to the present invention, a printed matter that has excellent register accuracy and can inhibit the breakage of a packaging bag can be obtained even with the use of a flexible film such as a polyolefin film

### Description of Embodiments

Preferred embodiments of the method of producing a printed matter according to the present invention will now be described in detail. The present invention, however, should not be construed as being limited to the embodiments described below for illustrative purposes, and various modifications can be made to carry out the present invention in accordance with the intended purpose and use, without departing from the gist of the present invention.

The method of producing a printed matter according to one embodiment of the present invention includes, in the order mentioned: the transfer step of transferring an ink onto a polyolefin film having a tensile modulus of 200 MPa to 1,000 MPa in an MD direction by a central impression printing method (this step may be hereinafter simply referred to as "the transfer step"); and the curing step of irradiating the ink with an electron beam to cure the ink (this step may be hereinafter simply referred to as "the curing step"). The ink transferred onto the polyolefin film in the transfer step can be cured in a short time in the curing step, so that the environmental load can be reduced. Prior to the transfer step, the method may further include the surface treatment step of performing a corona discharge treatment or the like on the surface of the polyolefin film.

First, the transfer step will be described. In the transfer step, an ink is transferred onto a polyolefin film having a tensile modulus of 200 MPa to 1,000 MPa in an MD direction by a central impression printing method.

The central impression printing method refers to a printing method that uses a common impression cylinder for each printing unit. The central impression printing method is basically a wet-on-wet printing method in which inks are cured after all colors are printed. A pressure is applied by a blanket of a rear cylinder with an ink film, which has been transferred to a substrate in advance, being in an uncured state, and this reduces the irregularities on the surface of the ink film and thereby inhibits the diffused reflection of light, as a result of which a high-density color can be expressed with a small amount of ink, and excellent toning resistance can be obtained. In addition, since the distance between color units is short during printing, the register accuracy can be improved.

In the present invention, a polyolefin film that is a flexible film is used as a printing object. Examples of the polyolefin film include unstretched polypropylene films, biaxially stretched polypropylene films, unstretched polyethylene films, and biaxially stretched polyethylene films. Thereamong, an unstretched polyolefin film is preferred, and an unstretched polypropylene film is more preferred, since these films can be easily controlled to have a tensile modulus in the below-described range.

The present invention is characterized by using a polyolefin film that has a tensile modulus of 200 MPa to 1,000 MPa in an MD direction (flow direction). In the transfer step, in order to inhibit loosening and misalignment of the printing object at the time of ink transfer, a high tension is generally applied to the printing object in an MD direction. Therefore, in the present invention, with regard to the tension in the MD direction, a focus is given to the tensile modulus of the polyolefin film in the MD direction. When the tensile modulus in the MD direction is less than 200 MPa, the polyolefin film is likely to be misaligned, resulting in a decrease in the register accuracy. The tensile modulus in the MD direction is preferably 400 MPa or more, more preferably 600 MPa or more. Meanwhile, when the tensile modulus in the MD direction exceeds 1,000 MPa, the polyolefin film is likely to break when processed into a packaging bag.

The tensile modulus of the polyolefin film in the MD direction can be determined in accordance with JIS K7161-1:2014 and JIS K7127:1999. More specifically, for a strip-shaped test piece of 15 mm in width, a tensile test is conducted in the MD direction using a TENSELON-type universal tester under the conditions of a chuck distance of 50 mm and a test speed of 300 mm/min, and the tensile modulus is determined from the resulting stress-strain curve. The measurement is performed for five test pieces, and an average value thereof is defined as the tensile modulus of the polyolefin film in the MD direction.

The tensile modulus of the polyolefin film in the MD direction tends to be increased by, for example, an increase in the draw ratio in the MD direction, and a heat treatment. Therefore, the tensile modulus can be adjusted to be in a desired range by stretching and/or heat-treating the polyolefin film as necessary, and adjusting the conditions thereof as appropriate. Polyolefin films having various tensile moduli are commercially available from various companies, and one having a desired tensile modulus can be selected therefrom as well. Particularly, an unstretched polyolefin film is preferred, and an unstretched polypropylene film is more preferred.

The polyolefin film preferably has a thickness of 20 µm or more, and such a polyolefin film has a high strength and thus can further improve the register accuracy. Meanwhile, the thickness of the polyolefin film is preferably 60 µm or less, and this enables to obtain a more flexible printed matter.

Polyolefins are crystalline resins, and the polyolefin film thus has a certain level of crystallinity. In the present invention, it is preferred to select a polyolefin film in which a change in crystallinity caused by electron beam irradiation is small. In other words, when the crystallinity of the polyolefin film used in the transfer step is defined as C1 [%] and the crystallinity of the polyolefin film after electron beam irradiation performed under the conditions of an acceleration voltage of 110 kV and an irradiation dose of 40 kGy is defined as C2 [%], a ratio (C2/C1) of the crystallinity C2 after the electron beam irradiation with respect to the crystallinity C1 before the electron beam irradiation is preferably 0.8 to 1.2. The polyolefin film is subjected to not only a certain tension applied in the MD direction in the transfer step, but also electron beam irradiation performed for curing an ink in the below-described curing step. The crystalline state of the polyolefin film is assumed to be changed by the electron beam irradiation. The closer the crystallinity ratio (C2/C1) before and after the electron beam irradiation to 1, the further can a decrease in the strength and embrittlement, which are caused by a change in the crystallinity, be inhibited. In the present invention, an acceleration voltage of 110 kV and an irradiation dose of 40 kGy are selected as the conditions in which a change in the crystallinity that can be caused by electron beam irradiation is sufficiently exerted. When the ratio C2/C1 is 0.8 or higher, a decrease in the strength caused by a reduction in the crystallinity is inhibited, so that the register accuracy can be further improved. Meanwhile, when the ratio C2/C1 is 1.2 or lower, embrittlement caused by an increase in the crystallinity is inhibited, so that when the polyolefin film is processed into a packaging bag, breakage of the bag can be further inhibited.

Further, the C2 of the polyolefin film is preferably 20% to 50%. When the C2 is 20% or more, a decrease in the strength caused by a reduction in the crystallinity is inhibited in the below-described curing step, so that the register accuracy can be further improved. Meanwhile, when the C2 is 50% or less, embrittlement caused by an increase in the crystallinity is inhibited in the below-described curing step, so that when the polyolefin film is processed into a packaging bag, breakage of the bag can be further inhibited.

The crystallinity C1 and C2 of the polyolefin film can be determined by X-ray diffraction method. First, a 25 mm × 15 mm rectangular test piece (direction of each side is selected as desired) is collected from the polyolefin film with regard to C1, or from the polyolefin film that has been irradiated with an electron beam under the conditions of an acceleration voltage of 110 kV and an irradiation dose of 40 kGy with regard to C2. The thus obtained test piece is attached to an aluminum sample holder of an X-ray diffractometer such that the film thickness direction is aligned with the normal direction of the sample holder surface, and diffraction peaks are measured based on a reflection method by 2θ-θ continuous scanning while changing the incident angle of X-ray. In this case, the measurement conditions are as follows, and the measurement is performed at five spots that are randomly selected on the test piece.
- Measurement range (2θ): 5 to 60°
- Measurement step (2θ): 0.05°
- Integration time: 2 seconds

Subsequently, using analysis software, the thus obtained diffraction peaks are separated into a peak derived from a crystalline component and a peak derived from an amorphous component, and the crystallinity is calculated from the areas of these peaks, followed by calculation of an average value thereof. The crystallinity [%] can be calculated by the following equation: Peak area of crystalline component × 100/(Peak area of crystalline component + Peak area of amorphous component). The analysis software is not particularly limited as long as it can separate the peaks of interest and, for example, JADE 5.0 or JADE 2010 (manufactured by Materials Data Inc.) can be used.

The polyolefin film of the present invention preferably contains a polyethylene resin in an amount of 10% by mass or more. In a polyethylene, an increase in the crystallinity caused by electron beam irradiation is inhibited as compared to a polypropylene; therefore, by incorporating 10% by mass or more of a polyethylene resin, a change in the crystallinity caused by electron beam irradiation can be reduced. Meanwhile, the content of the polyethylene resin is preferably 80% by mass or less, and this enables to easily adjust the tensile modulus to be in the above-described preferred range. The content of the polyethylene resin is more preferably 50% by mass or less.

The polyolefin film of the present invention preferably further contains a polypropylene resin in an amount of 90% by mass or less. By incorporating a polypropylene resin in an amount of 90% by mass or less, a change in the crystallinity caused by electron beam irradiation can be reduced. In addition, the tensile modulus can be easily adjusted to be in the above-described preferred range. Meanwhile, the content of the polypropylene resin is preferably 20% by mass or more, and this enables to easily adjust the tensile modulus to be in the above-described preferred range. The content of the polyethylene resin is more preferably 50% by mass or more. When the content of the polyethylene resin is 50% by mass or more and that of the polypropylene resin is 50% by mass or less, it is preferred to uniaxially or biaxially stretch the polyolefin film so as to adjust the tensile modulus of the film to be in the above-described range.

Further, the content of a crystal nucleating agent in the polyolefin film of the present invention is preferably 0.01% by mass or less. A crystal nucleating agent is generally used for increasing the crystallinity of a film and, in the present invention, by controlling the content thereof to be 0.01% by mass or less, a change in the crystallinity caused by electron beam irradiation can be reduced. Particularly, when the content of the polypropylene resin is high, from the standpoint of reducing a change in the crystallinity caused by electron beam irradiation, the polyolefin film preferably contains no crystal nucleating agent.

Examples of the crystal nucleating agent include: inorganic particles, such as silica and talc; crystal nucleating agents that contain a metal salt of rosin as a main component; sorbitol-based crystal nucleating agents ; and crystal nucleating agents that are composed of a metal salt of aromatic organic phosphoric acid ester.

As a response to recent environmental issues and carbon neutrality, it is also preferred that the polyolefin film of the present invention contain a recycled raw material. The recycled raw material may be a mechanically recycled material or a chemically recycled material, and is not particularly limited. Further, the polyolefin film of the present invention may contain a biomass-derived (plant-derived) raw material, and it is also preferred to use these raw materials in combination with a conventional petrochemical-derived raw material by mixing.

The surface of the polyolefin film is preferably subjected to a surface treatment such as a corona discharge treatment, and the wetting tension of the film surface can thereby be improved. The polyolefin film may be surface-treated in advance, or the surface treatment step of performing a surface treatment, such as a corona discharge treatment, on the surface of the polyolefin film may be incorporated prior to the transfer step. Examples of an atmosphere gas in the corona discharge treatment include the air, carbon dioxide gas, and nitrogen, and two or more of these gases may be used.

Examples of a method of transferring an ink onto the polyolefin film include printing methods such as offset printing, letterpress printing, and intaglio printing. Thereamong, an offset printing method is preferably employed since it is suitable for high-speed printing.

The offset printing method encompasses a method using a waterless offset printing plate and a method using an offset printing plate. In the present invention, a method using a waterless offset printing plate is preferred. In the method using a waterless offset printing plate, since dampening water is not used during printing, radicals can be stably generated by electron beam irradiation in the below-described curing step. Therefore, the ink is sufficiently cured, and the adhesiveness between the ink and the polyolefin film can be improved.

The ink used in the present invention is preferably an electron beam-curable printing ink that is cured by electron beam irradiation in the below-described curing step, and preferably contains an acrylic resin, a pigment, and a polyfunctional (meth)acrylate. It is noted here that "(meth)acrylate" is a generic term for acrylate and methacrylate. Further, the ink preferably contains a urethane (meth)acrylate or a monofunctional (meth)acrylate.

The acrylic resin preferably contains an ethylenic unsaturated group and a carboxyl group. From the standpoint of improving the pigment dispersibility to reduce the ink cohesion and further improve the register accuracy, the acrylic resin has a weight-average molecular weight of preferably 5,000 or more, more preferably 15,000 or more. Meanwhile, from the standpoint of inhibiting entanglement of molecular chains to reduce the ink cohesion and further improve the register accuracy, the weight-average molecular weight of the acrylic resin is preferably 40,000 or less.

The content of the acrylic resin in the ink is preferably 6% by mass or more, but preferably 15% by mass or less.

The pigment may be, for example, an inorganic pigment or an organic pigment. Examples of the inorganic pigment include titanium oxide and carbon blacks, and examples of the organic pigment include phthalocyanine pigments, soluble azo pigments, insoluble azo pigments, and lake pigments. The ink may contain two or more of these pigments.

The content of the pigment in the ink is preferably 10% by mass or more, but preferably 50% by mass or less.

The polyfunctional (meth)acrylate refers to a compound that has a molecular weight of less than 5,000 and contains plural (meth)acryloyl groups. The molecular weight of the polyfunctional (meth)acrylate is preferably 1,000 or less. From the standpoint of obtaining excellent pigment dispersibility and improving the toning resistance, the polyfunctional (meth)acrylate is preferably pentaerythritol tri(meth)acrylate, diglycerin tri(meth)acrylate, ditrimethylolpropane tri(meth)acrylate, tricyclodecane dimethanol diacrylate, trimethylolpropane EO-modified triacrylate, or dipentaerythritol hexaacrylate.

The urethane (meth)acrylate refers to a urethane bond-containing (meth)acrylate, and is preferably an oligomer having a weight-average molecular weight of 2,000 or more but less than 5,000. In the present invention, even a (meth)acrylate having one or more (meth)acryloyl groups is classified as the urethane (meth)acrylate as long as it contains a urethane bond. Hydrogen bonding between urethane bonds contained in the urethane (meth)acrylate forms a hard segment, and this not only can provide the resulting ink cured film with toughness, but also allows the ink cured film to firmly bind with the surface of a plastic film as well; therefore, the adhesiveness with the polyolefin film can be improved. Further, polyol residues contained in the urethane (meth)acrylate form a soft segment, and this can provide the resulting ink cured film with flexibility; therefore, when the polyolefin film is processed into a packaging bag, breakage of the bag can be further inhibited.

The content of the urethane (meth)acrylate in the ink is preferably 5% by mass or more and, by this, when the polyolefin film is processed into a packaging bag, breakage of the bag can be further inhibited. Meanwhile, the content of the urethane (meth)acrylate in the ink is preferably 15% by mass or less and, by this, the register accuracy can be further improved.

The monofunctional (meth)acrylate functions as an auxiliary agent that reduces the ink cohesion, and can further improve register accuracy.

The monofunctional (meth)acrylate refers to a compound that has a molecular weight of less than 5,000 and contains one (meth)acryloyl group. Examples of the monofunctional (meth)acrylate include methyl (meth)acrylate, ethyl (meth)acrylate, propyl (meth)acrylate, butyl (meth)acrylate, pentyl (meth)acrylate, hexyl (meth)acrylate, heptyl (meth)acrylate, octyl (meth)acrylate, nonyl (meth)acrylate, decyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, heneicosyl (meth)acrylate, docosyl (meth)acrylate, isopropyl (meth)acrylate, isobutyl (meth)acrylate, isopentyl (meth)acrylate, isohexyl (meth)acrylate, isoheptyl (meth)acrylate, isooctyl (meth)acrylate, isononyl (meth)acrylate, isodecyl (meth)acrylate, isoundecyl (meth)acrylate, isododecyl (meth)acrylate, isotridecyl (meth)acrylate, isotetradecyl (meth)acrylate, isopentadecyl (meth)acrylate, isohexadecyl (meth)acrylate, isoheptadecyl (meth)acrylate, isooctadecyl (meth)acrylate, isononadecyl (meth)acrylate, isoeicosyl (meth)acrylate, isoheneicosyl (meth)acrylate, and isodocosyl (meth)acrylate. The ink may contain two or more of these monofunctional (meth)acrylates. Thereamong, alkyl (meth)acrylates that have an aliphatic skeleton having 13 to 22 carbon atoms are preferred.

The content of the monofunctional (meth)acrylate in the ink is preferably 1 part by mass or more with respect to 100 parts by mass of the polyfunctional (meth)acrylate. This moderately accelerates the progress of phase separation, and a microphase-separated structure is thus likely to be formed in a stable manner; therefore, the register accuracy can be further improved. Meanwhile, the content of the monofunctional (meth)acrylate is preferably 7 parts by mass or less. This moderately inhibits the progress of phase separation, and a microphase-separated structure is thus likely to be maintained in a stable manner; therefore, the register accuracy can be further improved.

The ink used in the present invention preferably further contains a surfactant. By incorporating a surfactant, the pigment dispersibility is improved, and the ink cohesion is thus further reduced so that the register accuracy can be further improved.

When the ink used in the present invention is a white ink, the surfactant is preferably an anionic surfactant, and this improves the dispersibility of a white pigment, such as titanium oxide, zinc oxide, or alumina white, and thereby further reduces the ink cohesion, so that the register accuracy can be further improved.

Examples of the anionic surfactant include "DISPERBYK" (registered trademark) 111 (trade name) manufactured by BYK Japan K.K., "AQUALON" (registered trademark) AR-10 (trade name) manufactured by DKS Co., Ltd., sodium dodecylbenzenesulfonate, sodium laurate, sodium myristate, sodium palmitate, sodium stearate, sodium oleate, potassium laurate, potassium myristate, potassium palmitate, potassium stearate, potassium oleate , sodium N-stearoyl-L-glutamate, sodium *N*-stearoyl-*N*-methyltaurate, and sodium N-lauroyl-L-glutamate. The ink may contain two or more of these anionic surfactants.

The content of the surfactant in the ink is preferably 1 part by mass to 20 parts by mass with respect to 100 parts by mass of the pigment.

The ink used in the present invention may also contain other components.

In the transfer step, the thickness of the ink to be transferred onto the polyolefin film is preferably 0.1 to 50 µm. When the thickness of the ink is 0.1 mm or more, the ink is likely to be uniformly transferred onto the film surface, so that the printing quality can be improved. Meanwhile, when the thickness of the ink is 50 µm or less, the adhesiveness between the ink and the film does not deteriorate.

In the case of transferring a white ink onto a substrate, it is preferred to transfer the white ink two or more times. By this, not only the covering rate is improved but also the amount of the ink per transfer is reduced, so that the register accuracy can be further improved.

Next, the curing step will be described.

When the ink transferred onto the polyolefin film is irradiated with an electron beam, radicals are generated in the ink and the ink is cured, as a result of which a printed matter can be obtained. The electron beam passing through the ink also acts on a surface layer of the polyolefin film; therefore, radicals are also generated from the surface layer of the polyolefin film. Since radicals existing in the surface layer of the polyolefin film facilitate the progress of crosslinking reaction between the ink and the film surface layer, the adhesiveness between the ink and the polyolefin film in the printed matter is believed to be further improved.

In the curing step, it is preferred to irradiate the electron beam such that the polyolefin film after the curing has a crystallinity of 20% to 50%. When the crystallinity of the polyolefin film after the curing is 20% or more, a decrease in the strength caused by a reduction in the crystallinity is inhibited, so that the register accuracy can be further improved. Meanwhile, when the crystallinity of the polyolefin film after the curing is 50% or less, embrittlement caused by an increase in the crystallinity is inhibited, so that when the printed matter is processed into a packaging bag, breakage of the bag can be further inhibited.

The crystallinity of the polyolefin film after the curing tends to be increased as the electron beam irradiation conditions, such as the acceleration voltage and the irradiation dose, are increased. For example, by selecting a polyolefin film having a C1 value in a desired range and appropriately adjusting the electron beam irradiation conditions such as the acceleration voltage and the irradiation dose, the crystallinity of the polyolefin film after the curing can be adjusted to be in a desired range.

In the curing step, the acceleration voltage of the electron beam irradiation is preferably 70 kV to 90 kV, and the irradiation dose is preferably 20 kGy to 60 kGy. By setting the acceleration voltage at 70 kV or more, the curing of the ink sufficiently proceeds, so that the adhesiveness between the ink and the polyolefin film is further improved. In addition, when the printed matter is processed into a packaging bag, breakage of the bag can be further inhibited. Meanwhile, by setting the accelerating voltage at 90 kV or less, a change in the crystallinity of the polyolefin film in the curing step can be easily adjusted to be in the above-described preferred range, so that the register accuracy can be further improved and, when the printed matter is processed into a packaging bag, breakage of the bag can be further inhibited. Further, by setting the irradiation dose at 20 kGy or more, the curing of the ink sufficiently proceeds, so that the adhesiveness between the ink and the polyolefin film is further improved. The irradiation dose is more preferably 30 kGy or more. By this, when the printed matter is processed into a packaging bag, breakage of the bag can be further inhibited. Meanwhile, by setting the irradiation dose at 60 kGy or less, a change in the crystallinity of the polyolefin film in the curing step can be easily adjusted to be in the above-described preferred range, so that the register accuracy can be further improved and, when the printed matter is processed into a packaging bag, breakage of the bag can be further inhibited.

The printed matter obtained by the method of the present invention is preferably used for laminates in which a sealant layer is laminated, and various packaging bags.

Next, the method of producing a laminate according to the present invention will be described.

The method of producing a laminate according to the present invention includes the step of laminating an unstretched polyolefin film on a printed matter obtained by the above-described method. The unstretched polyolefin film is preferably laminated on the ink side of the printed matter. The resulting laminate is a laminate of the printed matter obtained by the above-described method and the unstretched polyolefin film, and the unstretched polyolefin film serves as a sealant layer. Examples of the unstretched polyolefin film include unstretched low-density polyethylene films, unstretched medium-density polyethylene films, unstretched high-density polyolefin films, unstretched linear low-density polyethylene films, and unstretched polypropylene films.

The unstretched polyolefin film to be laminated preferably has a tensile modulus of 50 MPa to 400 MPa. With the tensile modulus being 50 MPa or more, when the resulting laminate is processed into a packaging bag, breakage of the bag can be further inhibited. Meanwhile, with the tensile modulus being 400 MPa or less, a bag can be easily produced. The tensile modulus of the unstretched polyolefin film can be measured in the same manner as that of the above-described polyolefin film.

The unstretched polyolefin film to be laminated preferably has a thickness of 30 µm to 100 µm. With the thickness being 30 µm or more, when the resulting laminate is processed into a packaging bag, breakage of the bag can be further inhibited. In addition, the moisture resistance is further improved. Meanwhile, with the thickness being 100 µm or less, a bag can be easily produced.

Next, the method of producing a packaging bag according to the present invention will be described.

The method of producing a packaging bag according to the present invention preferably includes the steps of: producing a laminate by the above-described method; and producing a bag from the laminate. For the step of producing a bag from the laminate, for example, a method of heat-fusing peripheral parts of unstretched polyolefin films of two laminates with each other may be employed. Specifically, two laminates are superimposed such that their unstretched polyolefin films face each other, and the periphery of the resultant is heat-fused on three sides. The resultant is filled with contents, and the remaining opening is subsequently heat-fused, whereby a packaging bag can be produced.

### Examples

The present invention will now be described more concretely by way of Examples. It is noted here, however, that the present invention should not be construed as being limited to the below-described Examples by any means. First, the raw materials used in Examples and Comparative Examples are listed below.

### <Ink Raw Materials>

Pigment 1: "TIPAQUE" (registered trademark) CR58-2 (manufactured by Ishihara Sangyo Kaisha, Ltd.)
Pigment 2: CARMINE 6B 1483LT (manufactured by Dainichiseika Color & Chemicals Mfg. Co., Ltd.)

Acrylic resin: An acrylic resin having an ethylenic unsaturated group and a hydrophilic group was obtained by an addition reaction of 0.55 equivalents of glycidyl methacrylate with carboxyl groups of a copolymer composed of 25% by mass of methyl methacrylate, 25% by mass of styrene, and 50% by mass of methacrylic acid. The thus obtained resin had a weight-average molecular weight of 34,000, an acid value of 105 mg KOH/g, and an iodine value of 2.0 mol/kg.
Polyfunctional (meth)acrylate 1: a mixture of pentaerythritol triacrylate and pentaerythritol tetraacrylate, "MIRAMER" (registered trademark) M340 (manufactured by Miwon Specialty Chemical Co., Ltd.), molecular weight: 298
Polyfunctional (meth)acrylate 2: trimethylolpropane EO-modified triacrylate ("MIRAMER" (registered trademark) M3190, manufactured by Miwon Specialty Chemical Co., Ltd.), molecular weight: 692
Polyfunctional (meth)acrylate 3: dipentaerythritol hexaacrylate ("MIRAMER" (registered trademark) M600, manufactured by Miwon Specialty Chemical Co., Ltd.), molecular weight: 578
Urethane (meth)acrylate 1: urethane (meth)acrylate having a urethane bond fraction of 8% by mass, composed of an alicyclic diisocyanate (hydrogenated XDI), carboxylic acids (isophthalic acid and adipic acid), a polyol, and 2-hydroxyethyl acrylate; weight-average molecular weight (Mw): 3,600
Urethane (meth)acrylate 2: polyester-based urethane acrylate (UF-3007M, manufactured by Kyoeisha Chemical Co., Ltd.), weight-average molecular weight (Mw): 3,800
Monofunctional (meth)acrylate: octadecyl acrylate (manufactured by Tokyo Chemical Industry Co., Ltd.), molecular weight: 325, melting point: 28°C
Surfactant 1: "DISPERBYK" (registered trademark) 111 (manufactured by BYK Japan K.K.), anionic surfactant
Surfactant 2: "AQUALON" (registered trademark) AR-10 (manufactured by DKS Co., Ltd.), anionic surfactant

### <Film Production>

Prescribed polyethylene, polypropylene, and additives were mixed at a prescribed ratio and melt-extruded at 280°C, and the resulting mixture was subsequently discharged in the form of a sheet from a nozzle having a slit-shaped discharge port, after which the sheet was cooled and molded on a cooling drum having a surface temperature of 30°C to obtain an unstretched polyolefin film. The thus obtained unstretched polyolefin film was preheated as required, and subsequently 5-fold stretched at 135°C in the longitudinal direction as required to obtain a uniaxially stretched polyolefin film. The thus obtained uniaxially stretched film was further 10-fold stretched in the width direction as required in a tenter heated to 160°C, subsequently heated-treated at 150°C while allowing several percent of widthwise relaxation as required, whereby a biaxially stretched polyolefin film was obtained.

The tensile modulus measured by the below-described method and the film thickness were as follows.
Polyolefin film 1: tensile modulus in MD direction = 754 MPa, film thickness = 25 µm, polypropylene ratio = 95% by mass, polyethylene ratio = 5% by mass, ratio of crystal nucleating agent = 0.05% by mass
Polyolefin film 2: tensile modulus in MD direction = 949 MPa, film thickness = 25 µm, polypropylene ratio = 100% by mass, ratio of crystal nucleating agent = 0.00% by mass
Polyolefin film 3: tensile modulus in MD direction = 488 MPa, film thickness = 25 µm, polypropylene ratio = 80% by mass, polyethylene ratio = 20% by mass, ratio of crystal nucleating agent = 0.05% by mass
Polyolefin film 4: tensile modulus in MD direction = 250 MPa, film thickness = 25 µm, polypropylene ratio = 20% by mass, polyethylene ratio = 80% by mass, ratio of crystal nucleating agent = 0.05% by mass
Polyolefin film 5: tensile modulus in MD direction = 184 MPa, film thickness = 25 µm, polypropylene ratio = 10% by mass, polyethylene ratio = 90% by mass, ratio of crystal nucleating agent = 0.05% by mass
Polyolefin film 6: tensile modulus in MD direction = 1,230 MPa, film thickness = 25 µm, polypropylene ratio = 100% by mass, ratio of crystal nucleating agent = 0.05% by mass
Polyolefin film 7: tensile modulus in MD direction = 215 MPa, tensile modulus in TD direction = 234 MPa, film thickness = 60 µm; unstretched polypropylene film

### <Ink Production>

The acrylic resin, polyfunctional (meth)acrylates, monofunctional (meth)acrylate, urethane (meth)acrylates, and surfactants shown in Table 1 were each weighed and heated at 95°C for 390 minutes with stirring at a rotation speed of 500 rpm using a disper blade to obtain varnishes. To the thus varnishes, the pigment shown in Table 1 was added, and the resultants were each passed through a three-roll mill "EXAKT" (registered trademark) M-80S (manufactured by EXAKT Technologies, Inc.) five times in the setting of "Gap 1", whereby a magenta ink and white inks 1 to 7 were obtained as offset printing inks.

**[Table 1]**

| | | Magenta Ink | White Ink 1 | White Ink 2 | White Ink 3 | White Ink 4 | White Ink 5 | White Ink 6 | White Ink 7 |
|---|---|---|---|---|---|---|---|---|---|
| | Pigment 1 | 18 | - | - | - | - | - | - | - |
| | Pigment 2 | - | 45 | 45 | 45 | 45 | 45 | 45 | 45 |
| | Acryl Resin | 15 | 7.9 | 7.9 | 7.9 | 7.9 | 7.9 | 7.9 | 7.9 |
| | Multi functional (metha)acrylate 1 | 45 | 28.1 | 28.1 | 29.1 | 29.1 | 38.1 | 38.1 | 39.1 |
| Content (Parts by Mass) | Multi functional (metha)acrylate 2 | 20 | 6 | 6 | 6 | 6 | 6 | 6 | 6 |
| | Multi functional (metha)acrylate 3 | 2 | 1 | 1 | 1 | 1 | 1 | 1 | 1 |
| | Monoi functional (metha)acrylate | - | 1 | 1 | 1 | 1 | 1 | 1 | 1 |
| | Urethane (meth)acrylate 1 | - | 10 | - | 10 | - | - | - | - |
| | Urethane (meth)acrylate 2 | - | - | 10 | - | 10 | - | - | - |
| | Surfactant 1 | - | 1 | 1 | - | - | 1 | - | - |
| | Surfactant 2 | - | - | - | - | - | - | 1 | - |

Evaluation methods are described below.

### <Film Tensile Modulus>

A strip-shaped test piece of 15 mm in width and 60 mm in length was collected from each of the above-described films 1 to 7 and, in accordance with JIS K7161-1:2014 "Plastics - Determination of tensile properties" and JIS K7127:1999 "Plastics - Determination of tensile properties", a tensile test was conducted in the machine direction (MD direction) of each film using a tensile tester (universal tester "TENSILON" (registered trademark), manufactured by Orientec Co., Ltd.) under the conditions of a temperature of 23°C, a chuck distance of 50 mm, and a speed of 300 mm/min, after which the tensile modulus was determined from the thus obtained stress-strain curve. The measurement was performed for five test pieces, and an arithmetic mean value thereof was defined as the tensile modulus of the film.

### <Film Crystallinity>

A 25 mm × 15 mm rectangular test piece (direction of each side was selected as desired) was collected from each of the above-described polyolefin films 1 to 6. Further, the polyolefin films 1 to 6 were irradiated with an electron beam using an electron beam irradiator (LB1036, manufactured by Eye Electron Beam Co., Ltd.) at varying acceleration voltage and irradiation dose as shown in Table 1, after which a 25 mm × 15 mm rectangular test piece (direction of each side was selected as desired) was collected from each of these films. The thus obtained test pieces were each attached to an aluminum sample holder of an X-ray diffractometer (4036A2, manufactured by Rigaku Corporation) such that the film thickness direction was aligned with the normal direction of the sample holder surface and, using CuKα radiation (with a Ni filter) as an X-ray source, diffraction peaks were measured based on a reflection method by 2θ-θ continuous scanning while changing the incident angle of X-ray under the output conditions of 40 kV and 30 mA. The measurement conditions were set as follows, and the measurement was performed at five spots that were randomly selected on each sample.
- Measurement range (2θ): 5 to 60°
- Measurement step (2θ): 0.05°
- Integration time: 2 seconds

Using analysis software (JADE 5.0, manufactured by Materials Data Inc.), the diffraction peaks obtained by the measurement were separated into a peak derived from a crystalline component and a peak derived from an amorphous component, and the crystallinity was calculated from the areas of these peaks using the following equation. An arithmetic mean of the thus calculated values was defined as the crystallinity. Crystallinity (%) = Peak area of crystalline component × 100/(Peak area of crystalline component + Peak area of amorphous component)

The results are shown in Table 2.

**[Table 2]**

| | Electron Ray Irradiance (kGy) | Acceleration Voltage (kV) | Crystallinity (%) |
|---|---|---|---|
| | 0 | 0 | 41.6 |
| | 10 | 80 | 41.8 |
| | 20 | 80 | 41.9 |
| | 30 | 80 | 41.2 |
| | 40 | 60 | 41.4 |
| Polyolefin Film 1 | 40 | 70 | 43.3 |
| | 40 | 80 | 44.0 |
| | 40 | 90 | 45.2 |
| | 40 | 110 | 51.8 |
| | 60 | 80 | 49.3 |
| | 80 | 80 | 54.2 |
| Polyolefin Film 2 | 0 | 0 | 45.4 |
| | 40 | 80 | 41.5 |
| | 40 | 110 | 38.4 |
| Polyolefin Film 3 | 0 | 0 | 38.1 |
| | 40 | 80 | 38.9 |
| | 40 | 110 | 39.2 |
| Polyolefin Film 4 | 0 | 0 | 22.4 |
| | 40 | 80 | 23.5 |
| | 40 | 110 | 23.9 |
| Polyolefin Film 5 | 0 | 0 | 19.1 |
| | 40 | 80 | 18.7 |
| Polyolefin Film 6 | 0 | 0 | 54.2 |
| | 40 | 80 | 54.9 |

### <Register Accuracy >

In each of Examples and Comparative Examples, printing was continuously performed without adjustment from a state where cross marks (register marks) for checking the register granularity of each color were aligned at the same position during the printing. For the resulting printed matter after a lapse of 30 seconds, the distance between a magenta cross mark (register mark) and a white cross mark (register mark) farthest away from the magenta cross mark (register mark) was measured. A smaller distance between the register marks represents a better register accuracy, and the register accuracy was evaluated as "good" when the distance was 0.3 mm or less.

### <Adhesiveness>

A diluted solution, which was obtained by diluting a dry laminate adhesive A-953/A-93 (manufactured by Mitsui Chemicals, Inc.) with ethyl acetate to a nonvolatile content of 50% by mass, was applied onto the ink of each printed matter obtained in Examples and Comparative Examples using a bar coater No. 6, and subsequently dried with hot air. The dry weight of the applied adhesive was 2.3 g/cm². On the printed matter to which the adhesive had been applied, the polyolefin film 7 was laminated using a calender roll (manufactured by Matsumoto Kikai Mfg. Co., Ltd.), and the resultant was aged at 40°C for 3 days to obtain a laminate.

From the thus obtained laminate, a strip-shaped test piece of 15 mm in width was collected using a cutter. In accordance with JIS K6854-2:1999 "Adhesives - Determination of peel strength of bonded assemblies - Part 2: 180° peel", a 180° peel test was conducted using a tensile tester at a load speed of 200 mm/min to measure the peel strength between the ink and each of the polyolefin films 1 to 6. The adhesiveness was evaluated as "good" when the peel strength was 1 N/15 mm.

### <Breakage of Packaging Bag Due to Dropping>

Two rectangular test pieces of 570 mm in length and 360 mm in width were collected from the laminate produced by the above-described method, and superimposed such that their polyolefin films 7 faced each other, after which the peripheral part of the resultant was sealed on three sides at a width of 10 mm with a pressure of 0.1 MPa using a heat seal tester (manufactured by Tester Sangyo Co., Ltd.). The resultant was filled with 10 kg of rice, and the remaining peripheral part on one side was tightly sealed in the same manner, whereby a rice-containing packaging bag was produced.

The thus obtained rice-containing packaging bag was dropped from a height of 0.5 m, 1.0 m, and 1.5 m for a total of three times in each of the vertical direction (with the lengthwise direction of the bag being arranged vertically), the lateral direction (with the widthwise direction of the bag being arranged vertically), and the horizontal direction (with the length-width plane being arranged horizontally) to examine the presence or absence of bag breakage. An evaluation of "good" was given when the bag was not broken in all of the three drops, while an evaluation of "not acceptable" was given when the bag was broken in at least one of the three drops. It was evaluated that the breakage of the bag was inhibited when the bag was not broken by the dropping from a height of 0.5 m.

### [Example 1]

A waterless offset printing plate of 1,070 mm in width (widthwise direction) and 674 mm in length (printing direction) (TAN-E, manufactured by Toray Industries, Inc.), which had a cross mark for checking register accuracy (register mark) having a line thickness of 0.1 mm in the center of the printing direction at a position of 50 mm from the respective ends of the plate in the widthwise direction, was arranged on the first cylinder of a central impression-type printer (CI-8, manufactured by Comexi Group). Further, a waterless offset printing plate of 1,070 mm in width (widthwise direction) and 674 mm in length (printing direction) (TAN-E, manufactured by Toray Industries, Inc.), which had a 100% solid image section of 900 mm in width (widthwise direction) and 500 mm in length (printing direction) in the center of the plate along with a cross mark for checking register accuracy (register mark) having a line thickness of 0.1 mm in the center of the printing direction at a position of 50 mm from the respective ends of the plate in the widthwise direction, was arranged on each of the sixth and the seventh cylinders of the above-described central impression-type printer. The magenta ink obtained by the above-described method was set on the first cylinder, and the while ink 1 obtained by the above-described method was set on the sixth and the seventh cylinders.

Using a corona treatment device attached to the printer, the polyolefin film 1 serving as a substrate was irradiated with a corona discharge at an irradiation intensity of 8.00 kW. Subsequently, the magenta ink and the white ink were printed at a speed of 100 m/min by a wet-on-wet printing method using T414 (manufactured Kinyosha Co., Ltd., thickness: 1.95 mm) as a blanket under the following conditions: ink feed rate on first cylinder = 5%; ink feed rate on sixth and seventh cylinders = 40%; preset temperature of chiller for impression cylinder = 25°C; and preset temperature of chillers for swing roller and ink fountain = 28°C. After all of the inks were printed, the inks were cured by irradiating thereto an electron beam under the conditions of an acceleration voltage of 80 kV and an irradiation dose of 40 kGy using an electron beam irradiator attached to the printer, whereby a printed matter was obtained.

The results of evaluation performed by the above-described methods using the thus obtained printed matter are shown in Table 3. In Example 1, the register accuracy and the adhesiveness were both good, and bag breakage was not observed, which is good.

### [Examples 2 to 4]

Printed matters were obtained in the same manner as in Example 1, except that the respective polyolefin films shown in Table 3 were used in place of the polyolefin film 1. The results of evaluation performed by the above-described methods using the thus obtained printed matters are shown in Table 3. In Examples 2 to 4, the higher the tensile modulus, the better was the register accuracy. The adhesiveness was good in all cases, and bag breakage was not observed, which is good.

### [Examples 5 to 8]

Printed matters were obtained in the same manner as in Example 1, except that the acceleration voltage of the electron beam irradiation was changed as shown in Table 3. The results of evaluation performed by the above-described methods using the thus obtained printed matters are shown in Table 3. In Examples 5 to 8, the register accuracy was good in all cases, and the higher the acceleration voltage, the better was the adhesiveness. On the other hand, with regard to bag breakage, a lower acceleration voltage tended to yield a better result.

### [Examples 9 to 11]

Printed matters were obtained in the same manner as in Example 8, except that the respective polyolefin films shown in Table 3 were used in place of the polyolefin film 1. The results of evaluation performed by the above-described methods using the thus obtained printed matters are shown in Table 3. In Examples 9 to 11, the higher the tensile modulus, the better was the register accuracy. The adhesiveness was good in all cases, and bag breakage was not observed, which is good.

### [Examples 12 to 15]

Printed matters were obtained in the same manner as in Example 1, except that the irradiation dose of the electron beam irradiation was changed as shown in Table 4. The results of evaluation performed by the above-described methods using the thus obtained printed matters are shown in Table 4. In Examples 12 to 15, the register accuracy was good in all cases, and the higher the irradiation dose, the better was the adhesiveness. On the other hand, with regard to bag breakage, a lower irradiation dose tended to yield a better result.

### [Examples 16 to 21]

Printed matters were obtained in the same manner as in Example 1, except that the respective white inks shown in Table 4 were used in place of the white ink 1. The results of evaluation performed by the above-described methods using the thus obtained printed matters are shown in Table 4. In Examples 16 to 21, the use of an ink containing an anionic surfactant resulted in better register accuracy, and the use of an ink containing urethane acrylate tended to make bag breakage less likely to occur. The peel strength was good in all cases.

### [Comparative Examples 1 and 2]

Printed matters were obtained in the same manner as in Example 1, except that the respective polyolefin films shown in Table 4 were used in place of the polyolefin film 1. The results of evaluation performed by the above-described methods using the thus obtained printed matters are shown in Table 4. In Comparative Example 1, the register accuracy was poor due to the use of the film having a tensile modulus of less than 200 MPa in the MD direction. In Comparative Example 2, the bag was easily broken due to the use of the film having a tensile modulus of 1,000 MPa or more in the MD direction.

**[Table 3]**

| | | | Example No. | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| White Ink | Type | | 1 | 1 | 1 | 1 | 1 | 1 | 1 | 1 | 1 | 1 | 1 |
| Electron Ray Irradiation | Irradiance (kGy) | | 40 | 40 | 40 | 40 | 40 | 40 | 40 | 40 | 40 | 40 | 40 |
| | Acceleration Voltage (kV) | | 80 | 80 | 80 | 80 | 60 | 70 | 90 | 110 | 110 | 110 | 110 |
| | Type | | 1 | 2 | 3 | 4 | 1 | 1 | 1 | 1 | 2 | 3 | 4 |
| | MD Tensile Elastic Modulus (MPa) | | 754 | 949 | 488 | 250 | 754 | 754 | 754 | 754 | 949 | 488 | 250 |
| | Thickness of Polyolefin Film (µm) | | 25 | 25 | 25 | 25 | 25 | 25 | 25 | 25 | 25 | 25 | 25 |
| | Polyethylene Resin Content (Mass %) | | 5 | 0 | 20 | 80 | 5 | 5 | 5 | 5 | 0 | 20 | 80 |
| | Polypropylene Resin Content (Mass %) | | 95 | 100 | 80 | 20 | 95 | 95 | 95 | 95 | 100 | 80 | 20 |
| Polyolefin Film | Crystallinity C1 (%) | | 41.6 | 45.4 | 38.1 | 22.4 | 41.6 | 41.6 | 41.6 | 41.6 | 45.4 | 38.1 | 22.4 |
| | Crystallinity Ratio C2/C1 | | 1.25 | 0.85 | 1.03 | 1.07 | 1.25 | 1.25 | 1.25 | 1.25 | 0.85 | 1.03 | 1.07 |
| | Crystallinity after Electron Ray Irradiation at the Condition of Acceleration Voltage: 110kV, Irradiance: 40kGyC2 (%) | | 51.8 | 38.4 | 39.2 | 23.9 | 51.8 | 51.8 | 51.8 | 51.8 | 38.4 | 39.2 | 23.9 |
| | Crystallinity after Electron Ray Irradiation (%) | | 44.0 | 41.5 | 38.9 | 23.5 | 41.4 | 43.3 | 45.2 | 51.8 | 38.4 | 39.2 | 23.9 |
| Evaluation Result | Register Accuracy | Distance between Register Marks (mm) | 0.15 | 0.15 | 0.25 | 0.30 | 0.15 | 0.15 | 0.15 | 0.15 | 0.15 | 0.25 | 0.30 |
| | Adhesiveness | Peel Strength (N) | 3.1 | 3.3 | 3.2 | 3.4 | 2.5 | 3.0 | 3.4 | 3.5 | 3.6 | 3.5 | 3.8 |
| | Break of Bag | 0.5m Hight | Good | Good | Good | Good | Good | Good | Good | Good | Good | Good | Good |
| | | 1.0m Hight | Good | Good | Good | Good | Good | Good | Good | Good | Good | Good | Good |
| | | 1.5m Hight | Good | Good | Good | Good | Good | Good | Good | Failure | Good | Good | Good |

**[Table 4]**

| | | | Example No. | | | | | | | | | | Comparative Example No. | |
|---|---|---|---|---|---|---|---|---|---|---|---|---|---|---|
| | | | 12 | 13 | 14 | 15 | 16 | 17 | 18 | 19 | 20 | 21 | 1 | 2 |
| White Ink | Type | | 1 | 1 | 1 | 1 | 2 | 3 | 4 | 5 | 6 | 7 | 1 | 1 |
| Electron Ray Irradiation | Irradiance (kGy) | | 20 | 30 | 60 | 80 | 40 | 40 | 40 | 40 | 40 | 40 | 40 | 40 |
| | Acceleration Voltage (kV) | | 80 | 80 | 80 | 80 | 80 | 80 | 80 | 80 | 80 | 80 | 80 | 80 |
| | Type | | 1 | 1 | 1 | 1 | 1 | 1 | 1 | 1 | 1 | 1 | 5 | 6 |
| | MD Tensile Elastic Modulus (MPa) | | 754 | 754 | 754 | 754 | 754 | 754 | 754 | 754 | 754 | 754 | 184 | 1,230 |
| | Thickness of Polyolefin Film (µm) | | 25 | 25 | 25 | 25 | 25 | 25 | 25 | 25 | 25 | 25 | 25 | 60 |
| | Polyethylene Resin Content (Mass %) | | 5 | 5 | 5 | 5 | 5 | 5 | 5 | 5 | 5 | 5 | 90 | 0 |
| | Polypropylene Resin Content (Mass %) | | 95 | 95 | 95 | 95 | 95 | 95 | 95 | 95 | 95 | 95 | 10 | 100 |
| Polyolefin Film | Crystallinity C1 (%) | | 41.6 | 41.6 | 41.6 | 41.6 | 41.6 | 41.6 | 41.6 | 41.6 | 41.6 | 41.6 | 19.1 | 54 |
| | Crystallinity Ratio C2/C1 | | 1.25 | 1.25 | 1.25 | 1.25 | 1.25 | 1.25 | 1.25 | 1.25 | 1.25 | 1.25 | - | - |
| | Crystallinity after Electron Ray Irradiation at the Condition of Acceleration Voltage: 110kV, Irradiance: 40kGyC2 (%) | | 51.8 | 51.8 | 51.8 | 51.8 | 51.8 | 51.8 | 51.8 | 51.8 | 51.8 | 51.8 | - | - |
| | Crystallinity after Electron Ray Irradiation (%) | | 41.9 | 41.2 | 49.3 | 54.2 | 44.0 | 44.0 | 44.0 | 44.0 | 44.0 | 44.0 | 18.7 | 54.9 |
| Evaluation Result | Register Accuracy | Distance between Register Marks (mm) | 0.15 | 0.15 | 0.15 | 0.15 | 0.15 | 0.25 | 0.25 | 0.10 | 0.10 | 0.15 | 0.45 | 0.10 |
| | Adhesiveness | Peel Strength (N) | 1.8 | 3.4 | 3.2 | 3.4 | 3.2 | 3.1 | 3.7 | 3.5 | 3.5 | 3.4 | 3.7 | 3.1 |
| | Break of Bag | 0.5m Hight | Good | Good | Good | Good | Good | Good | Good | Good | Good | Good | Good | Failure |
| | | 1.0m Hight | Good | Good | Good | Good | Good | Good | Good | Good | Good | Good | Good | Failure |
| | | 1.5m Hight | Good | Good | Good | Failure | Good | Good | Good | Failure | Failure | Failure | Good | Failure |

In Tables 3 and 4, "Crystallinity (%) after electron beam irradiation" means the crystallinity after the electron beam irradiation performed under the conditions of the irradiation dose (kGy) and the acceleration voltage (kV) that are shown in the rows of "Electron beam irradiation conditions".

## Claims

1. A method of producing a printed matter, the method comprising, in the order mentioned:
the transfer step of transferring an ink onto a polyolefin film having a tensile modulus of 200 MPa to 1,000 MPa in an MD direction by a central impression printing method; and
the curing step of irradiating the ink with an electron beam to cure the ink.

2. The method of producing a printed matter according to claim 1, wherein the polyolefin film has a thickness of 20 µm to 60 µm.

3. The method of producing a printed matter according to claim 1 or 2, wherein a ratio (C2/C1) of a crystallinity C2 of the polyolefin film after electron beam irradiation performed under the conditions of an acceleration voltage of 110 kV and an irradiation dose of 40 kGy with respect to a crystallinity C1 of the polyolefin film is 0.8 to 1.2.

4. The method of producing a printed matter according to any one of claims 1 to 3, wherein the crystallinity C2 of the polyolefin film after electron beam irradiation performed under the conditions of an acceleration voltage of 110 kV and an irradiation dose of 40 kGy is 20% to 50%.

5. The method of producing a printed matter according to any one of claims 1 to 4, wherein the polyolefin film comprises a polyethylene resin in an amount of 10% by mass or more.

6. The method of producing a printed matter according to claim 5, wherein the polyolefin film further comprises a polypropylene resin in an amount of 90% by mass or less.

7. The method of producing a printed matter according to any one of claims 1 to 6, wherein the content of a crystal nucleating agent in the polyolefin film is 0.01% by mass or less.

8. The method of producing a printed matter according to any one of claims 1 to 7, wherein, in the curing step, the electron beam is irradiated under the conditions of an acceleration voltage of 70 kV to 90 kV and an irradiation dose of 20 kGy to 60 kGy.

9. The method of producing a printed matter according to any one of claims 1 to 8, wherein the ink comprises an anionic surfactant.

10. The method of producing a printed matter according to any one of claims 1 to 9, wherein the ink comprises a urethane (meth)acrylate.

11. The method of producing a printed matter according to any one of claims 1 to 10, wherein, in the transfer step, the ink is transferred by offset printing.

12. A method of producing a laminate, the method comprising the steps of:
producing a printed matter by the method according to any one of claims 1 to 11; and
laminating an unstretched polyolefin film on the printed matter.

13. The method of producing a laminate according to claim 12, wherein the unstretched polyolefin film has a tensile modulus of 50 MPa to 400 MPa.

14. The method of producing a laminate according to claim 12 or 13, wherein the unstretched polyolefin film has a thickness of 30 µm to 100 µm.

15. A method of producing a packaging bag, the method comprising the steps of, in the order mentioned:
producing a laminate by the method of producing a laminate according to any one of claims 12 to 14; and
producing a bag from the laminate.
